# EUROPÄISCHE PATENTSCHRIFT

(11) **EP 3 344 894 B1**
(45) Veröffentlichungstag und Bekanntmachung des Hinweises auf die Patenterteilung: **08.11.2023**
(21) Anmeldenummer: 16763471.6
(22) Anmeldetag: 01.09.2016
(51) Int. Cl.: F16D 65/18, F16D 65/56

(54) **SCHEIBENBREMSE FÜR EIN FAHRZEUG, INSBESONDERE FÜR EIN NUTZFAHRZEUG**
DISC BRAKE FOR A VEHICLE, PARTICULARLY FOR A UTILITY VEHICLE
FREIN À DISQUE POUR UN VÉHICULE, NOTAMMENT POUR UN VÉHICULE UTILITAIRE

(30) Priorität: 01.09.2015 DE 102015114546
(43) Veröffentlichungstag der Anmeldung: 11.07.2018
(73) Patentinhaber: KNORR-BREMSE Systeme für Nutzfahrzeuge GmbH, 80809 München (DE)
(72) Erfinder: BECK, Thomas, 94036 Passau (DE); PRITZ, Wolfgang, 80637 München (DE); HIDRINGER, Michael, 94544 Hofkirchen (DE); HEINDL, Martin, 94535 Eging am See (DE)
(86) Internationale Anmeldenummer: PCT/EP2016/070560
(87) Internationale Veröffentlichungsnummer: WO 2017/037145

(56) Entgegenhaltungen:
- DE-A1- 4 416 175
- DE-A1- 10 139 902
- DE-A1-102004 058 433
- DE-A1-102012 008 573
- DE-B3- 10 242 397
- DE-C1- 4 430 258
- DE-C1- 10 219 148
- US-A1- 2005 269 171

## Beschreibung

Die Erfindung betrifft eine Scheibenbremse für ein Nutzfahrzeug nach dem Oberbegriff des Anspruchs 1.

Derartige Scheibenbremsen sind in verschiedensten Ausgestaltungen bekannt. Beispielhaft sei auf die DE 94 22 342 U1 oder die DE 102 42 397 B3 verwiesen, in der eine Zuspanneinrichtung offenbart ist, die mit einem bei einer Bremsung verschwenkbaren Drehhebel versehen ist, der an einem Ende als Exzenter ausgebildet ist.

Dabei liegt der Exzenter einerseits an der Innenwand des Sattelkopfes des Bremssattels und andererseits über eine Wälzrolle an einer Brücke an, in der zwei als Gewindespindeln ausgebildete Bremsstempel verdrehbar gelagert sind. Diese sind bei einer Bremsung, also bei einem Verschwenken des Drehhebels gegen einen zugeordneten Bremsbelag (von vorzugsweise zwei Bremsbelägen beidseits der Bremsscheibe) drückbar, der dann wiederum gegen die fahrzeugseitige Bremsscheibe gepresst wird.

Zur Lagerung des Drehhebels am Sattelkopf sind Wälzlager vorgesehen, üblicherweise in Form von Nadellagern, die in speziell gestalteten Lagerschalen gehalten sind. Die Lagerung des Drehhebels an der Brücke mittels der erwähnten Wälzrolle erfolgt mit der Bereitstellung eines sogenannten DU-Lagers als Lagerschale, die in einer rinnenförmigen Ausnehmung der Brücke und/oder des Drehhebels einliegt.

In der DE 10 2004 058 433 A1 ist eine Scheibenbremse thematisiert, die konstruktiv der vorgenannten entspricht, wobei anstelle einer separaten Wälzrolle der Drehhebel eine einstückig angeformte Wälzrolle aufweist, die unmittelbar an der Brücke anliegt.

Bei einer anderen, vergleichbaren und in der WO 96/12900 A1 offenbarten Konstruktion stützt sich der Drehhebel über eine Wälzrolle am Sattelkopf ab, während die Wälzlager an der Brücke positioniert sind.

Aus der DE 44 16 175 A1 ist eine Scheibenbremse bekannt, bei der der Exzenterabschnitt des Drehhebels an der einen Bremsstempel tragenden Brücke anliegt. Dabei weist diese Brücke zur Aufnahme des konvex gewölbten Exzenterabschnitts eine angepasste konkav ausgebildete Rinne auf.

Eine weitere Ausführung einer Scheibenbremse ist der DE 101 39 902 A1 zu entnehmen. Darin wird vorgeschlagen, den Drehhebel unmittelbar auf die Bremsstempel wirken zu lassen, wozu zwischen dem Drehhebel und einer Gewindespindel des Bremsstempels eine Kugel gelagert ist. Der Drehhebel selbst ist ebenfalls über Kugeln verschwenkbar am Sattelkopf abgestützt. Eine andere Ausführungsvariante dieser Scheibenbremse sieht den Einsatz von Zwischenstücken vor, die kugelartig geformte Enden aufweisen, die in daran angepasste Ausnehmungen des Drehhebels eingefügt sind, wobei das jeweilige Zwischenstück als Bestandteil des Bremsstempels mit der jeweils zugeordneten Gewindespindel funktional in Verbindung steht.

Aus der DE 10 2012 008 573 A1 und der DE 10 2012 012 816 A1 ist jeweils eine Scheibenbremse bekannt, bei der sich der Drehhebel gleichfalls mit Kugeln einerseits an einem Bremsstempel und andererseits am Bremssattel abstützt. Zum Zuspannen der Scheibenbremse ist hier jedoch lediglich ein zentraler Bremsstempel vorgesehen, mit einer verdrehbaren Stellspindel und einer darauf geführten Hülse mit einem Innengewinde, das in ein Außengewinde der Stellspindel eingreift, wobei die Hülse auf ihrer dem Drehhebel abgewandten und dem Bremsbelag zugewandten Seite ein den zugeordneten Bremsbelag kontaktierendes Druckstück trägt, das als Druckplatte ausgebildet ist.

Zur Positionierung der Kugeln am Bremssattel, d.h. am Sattelrücken, sind Lagerböcke an den Bremssattel angeformt, die stirnseitig zur Aufnahme der Kugeln eine daran angepasste Mulde aufweisen.

Problematisch hierbei ist die notwendige spanende Bearbeitung der Lagerböcke, wozu ein entsprechend langes und dadurch labiles Werkzeug durch eine Montageöffnung des Bremssattels eingeführt werden muss. Damit verbunden ist ein erheblicher Fertigungsaufwand sowohl bei der Bearbeitung selbst wie auch bei einer Kontrolle der Bearbeitung, die die maßlichen Gegebenheiten sowie die Oberflächengüte umfasst. Naturgemäß ist dies nur mit einem erheblichen Fertigungs- und damit Kostenaufwand möglich.

Eine über den Drehhebel betätigbare Nachstelleinrichtung ist neben dem Bremsstempel angeordnet und mit einem Zahnrad versehen, das mit einem verdrehfest an der Stellspindel gehaltenen Zahnrad kämmt, so dass sich zur mit dem Druckstück axial in Richtung des zugeordneten Bremsbelages verschiebt.

Sowohl in der DE 10 2012 103 017 A1 wie auch in der WO 2013/180 557 A1 ist jeweils eine Zuspanneinrichtung einer Scheibenbremse gezeigt und beschrieben, bei der, abweichend vom Gattungsbegriff, die Nachstellung zum Lüftspielausgleich nicht durch eine Verdrehung des Bremsstempels erfolgt, sondern durch einen in der Brück geführten Gewindebolzen, bei dessen Verdrehung die Brücke entsprechend verstellt wird.

Der Drehhebel liegt dabei bei der aus der DE 10 2012 103 017 A1 mit einem konvexen Exzenterabschnitt über Wälzlager an Druckstücken an, die mit der Brücke korrespondieren. Davon abweichend liegt der Drehhebel bei der Anordnung nach der WO 2013/180 557 A1 an Wälzrollen an, die andererseits in einer rinnenförmigen Aufnahme der fest stehenden Bremsstempel einliegen.

Optimierbar bei den bekannten Scheibenbremsen ist die Vielzahl von Bauteilen der Zuspanneinrichtung, die nur mit einem entsprechend hohen Fertigungsaufwand bereitzustellen sind und überdies erhebliche Montagekosten verursacht, da alle beteiligten Bauteile pass- und funktionsgenau eingebaut werden müssen. Überdies sind, um insbesondere auf die die Gewindespindeln aufnehmende Brücke einwirkende Seitenkräfte aufnehmen zu können, besondere konstruktive Maßnahmen erforderlich.

Der Erfindung liegt vor diesem Hintergrund die Aufgabe zugrunde, eine Scheibenbremse der gattungsgemäßen Art so weiterzuentwickeln, dass sie einfacher und kostengünstiger herstell- und montierbar ist und ihre Betriebssicherheit verbessert wird.

Diese Aufgabe wird durch eine Scheibenbremse mit den Merkmalen des Anspruchs 1 gelöst. Geschaffen wird eine Scheibenbremse für ein Fahrzeug, insbesondere für ein Nutzfahrzeug, mit einem zum Übergreifen einer Bremsscheibe ausgelegten Bremssattel, in dem eine Zuspanneinrichtung angeordnet ist, und mit einem einen Exzenter aufweisenden Drehhebel und mindestens einem Bremsstempel, der als eine Gewindespindelanordnung mit einer um eine Drehachse verdrehbaren Schraube und einer dieser gegenüber verdrehsicher gehaltenen Gewindehülse, deren Innengewinde in ein Außengewinde der Schraube eingreift, und mit dem bei Betätigung des Drehhebels wenigstens ein Bremsbelag gegen die Bremsscheibe pressbar ist, wobei der Drehhebel im Bremssattel relativ zu diesem verschwenkbar angeordnet ist und direkt oder über eines oder mehrere zwischengeschaltete Elemente an dem Bremssattel in wenigstens einem Abstützbereich abgestützt ist, wobei der gegenüber dem Bremsstempel verschwenkbare Drehhebel auf seiner der Abstützstelle an dem Bremssattel gegenüberliegenden Seite mindestens einen konvex geformten Abschnitt aufweist, der an einer daran angepassten konkaven Stirnseite in axialer Verlängerung an dieser anliegt.

Durch diese konstruktive Ausbildung des Drehhebels einerseits und des Bremsstempels andererseits kann prinzipiell auf den Einsatz von teureren Wälzlagern verzichtet werden, obwohl dieser alternativ auch möglich ist. Stattdessen ist der Einsatz eines oder mehrerer Gleitlager in Form von (Gleit-)Lagerschalen am Exzenter des Drehhebels möglich und bevorzugt, die in der Regel kostengünstiger sind als vergleichbare Wälzlager.

Dabei ist die erfindungsgemäße Konstruktion sowohl bei einer Scheibenbremse mit lediglich einem Bremsstempel wie auch bei einer mit zwei Bremsstempeln der beschriebenen Art realisierbar. Im letzteren Fall wird der Drehhebel mit vorzugsweise mit einer oder sogar zwei der konvexen Stellen versehen.

Für den Fall, dass quasi als Träger für die eingedrehten Teile der Gewindespindelanordnung eine Brücke Verwendung findet, liegt der Drehhebel nunmehr nicht mehr unmittelbar bzw. unter Zwischenfügung einer Wälzrolle an der Brücke an, sondern an einer Stirnseite der den Bremsstempel bildenden Gewindespindelanordnung. Je nach Ausführungsvariante kann die Schraube der Gewindespindelanordnung verdrehbar sein, um im Zusammenspiel mit einer Nachstelleinrichtung eine verschleißbedingte Änderung des Lüftspiels, d.h. des Abstandes zwischen dem zugeordneten Bremsbelag und der Bremsscheibe, auszugleichen.

Vorzugsweise kann ein korrespondierend zum konvexen Abschnitt des Drehhebels konkav geformter Abschnitt an der Stirnseite der Gewindespindelanordnung vorgesehen sein. Diese kann vorzugsweise einfach und günstig als kugelabschnittförmige Vertiefung ausgebildet sein, während der zugeordnete und daran anliegende Abschnitt des Drehhebels quasi als Gegenstück in Form eines ebenfalls günstig herstellbaren Kugelabschnitts daran angepasst ist. Hierbei bildet die Paarung konvexer Abschnitt des Drehhebels/konkave Vertiefung der Gewindespindelanordnung ein Drehlager bei der Verdrehung der Schraube.

Bei einer Ausführungsvariante, bei der die Schraube der Gewindespindelanordnung verdrehsicher gehalten ist und in Eingriff steht mit einer demgegenüber verdrehbaren Gewindehülse als Bestandteil des Bremsstempels, kann die dem Drehhebel zugewandte stirnseitige konkave Wölbung die Kontur eines Zylinderausschnitts besitzen, wobei die Krümmung in Schwenkrichtung verläuft. Daran angepasst ist die konvexe Wölbung des Drehhebels in einem an der Stirnseite der Mutter bzw. der Gewindehülse anliegenden Abschnitt, wobei sich die Krümmung dieses Abschnitts über den gesamten Schwenkbereich des Drehhebels erstreckt.

Nach einem weiteren Gedanken der Erfindung ist vorgesehen, den geformten Abschnitt des Drehhebels und/oder der entsprechend geformten Stirnseite des Bremsstempels mit einer Lagerschale zu versehen, vorzugsweise als Gleitlagerschale, insbesondere als Verbund-Lagerschale aus Metall/Kunststoff, um die Reibung bei einer Verschwenkung des Drehhebels zu minimieren. In diesem Fall liegt der konvex geformte Abschnitt mittelbar an der Gewindespindelanordnung bzw. dem Bremsstempel an.

Die gegenüberliegend an dem Sattelkopf sich abstützende Wälzrolle, die zylindrisch ausgebildet ist, wird ebenfalls von einer Lagerschale bereichsweise umhüllt, die eine entsprechend ausgebildete Lagerrinne des Bremssattels auskleidet und/oder eine Lagerrinne des Drehhebels, in der die Wälzrolle einliegt.

Bei dieser Ausführung sind der Drehhebel und die Wälzrolle als separate Teile hergestellt. Denkbar ist aber auch, die Wälzrolle und den Drehhebel einstückig auszubilden.

Vorzugsweise erfolgt die Lagerung des Drehhebels am Sattelkopf über Kugeln, die, gemäß einer bevorzugten Ausgestaltung der Erfindung, in separaten Lagerböcken gelagert sind, die im Sattelkopf befestigt sind.

Bei der Anordnung von zwei Lagerstellen, d.h. zwei Lagerböcken, die jeweils zur Aufnahme der Kugeln eine daran angepasste Mulde aufweisen, ist einer der Lagerböcke nicht starr mit dem Sattelkopf verbunden, sondern sozusagen schwimmend, so dass fertigungsbedingte Toleranzen der Lagerung ausgeglichen werden.

Fertigungstechnisch optimiert sind die Lagerböcke als Drehteile ausgebildet, jeweils mit einem Tragbolzen, in dem die Kugel einliegt und einem dazu abgesetzten Zapfen, der in eine angepasste Bohrung des Sattelkopfes eingesteckt ist.

Um eine exakt axiale Ausrichtung des jeweiligen Lagerbocks zu erreichen, ist die Stufenfläche zwischen dem Tragbolzen und dem Zapfen planeben ausgebildet, ebenso wie eine Anlagefläche des Sattelkopfes, an der die Stufenfläche anliegt.

Die Ausbildung als Drehteil des jeweiligen Lagerbocks stellt sich insbesondere in fertigungstechnischer Hinsicht als besonders vorteilhaft dar, wobei auch die Anlagefläche des Sattelkopfes mit geringem Fertigungsaufwand herstellbar ist.

Die starre Befestigung des einen Lagerbocks am Sattelkopf kann reibschlüssig erfolgen, wobei die Paarung Bohrung Sattelkopf/Zapfen im Sinne einer Presspassung ausgeführt ist. Denkbar ist aber auch, wenngleich fertigungstechnisch aufwändiger, den Zapfen mit einem Außengewinde und die Bohrung des Sattelkopfes mit einem Innengewinde zu versehen.

Statt als Drehteile können die Lagerböcke auch durch ein Kaltpressverfahren hergestellt sein, so dass zusätzliche mechanische Bearbeitungen, insbesondere spangebende, nicht erforderlich sind, wodurch sich eine besonders kostengünstige Herstellung ergibt.

Im Bedarfsfalls ist anstelle der schwimmenden Lagerung eines Lagerbocks auch eine schwimmende Lagerung beider Lagerböcke denkbar.

Weiterhin kann vorgesehen sein, zwischen den Kugeln und dem Drehhebel eine Gleitlagerschale, insbesondere in Form eines Verbund-Gleitlagers anzuordnen, das aus Metall und einer damit verbundenen Kunststoffschicht besteht.

Grundsätzlich kann der konvex geformte Abschnitt des Drehhebels und die daran angepasste Stirnseite des Bremsstempels ohne weitere maschinelle Bearbeitung eingesetzt werden. Dabei ist die Ausbildung des Drehhebels vor allem die des geformten Abschnitts durch Umformen hergestellt, beispielsweise durch Schmieden oder Taumeln. Für besondere Oberflächenanforderungen können die aneinander liegenden Oberflächen auch nachgearbeitet sein.

Wie sich gezeigt hat, bietet die Ausgestaltung des konvex angeformten Abschnitts des Drehhebels und/oder die daran anliegende konkave Stirnseite der Gewindespindelanordnung besondere funktionale Vorteile, wenn diese Anlageflächen einer Feinbearbeitung unterzogen sind, um so eine möglichst geringe Rauheit zu erreichen. Hierzu zählen beispielsweise eine Bearbeitung durch Gleitschleifen, Läppen, Polieren, Honen, Erodieren oder Walzen, wobei diese genannten Bearbeitungsmöglichkeiten beispielhaft zu sehen sind. Angestrebt wird ein möglichst geringer Rauwert, der in wirtschaftlich sinnvollem Maße erzielbar ist, entsprechend einer für ein Serienprodukt wie eine Scheibenbremse gefordert ist.

Zusammenfassend zeichnet sich die Erfindung durch eine kostengünstigere Herstellung und einen geringeren Montageaufwand aus, insbesondere, da die Zuspanneinrichtung insgesamt nunmehr mit weniger Bauteilen realisiert werden kann.

Auch die Betriebssicherheit der Scheibenbremse erfährt durch die Erfindung eine Verbesserung, da in Funktion auf die Hebellagerung einwirkende Seitenkräfte weitgehend verhindert werden.

Es ist einfach und kostengünstig, wenn der wenigstens eine konvex geformte Abschnitt elliptisch, kugelabschnittsartig oder tonnenabschnittsartig ausgebildet ist.

Bei Realisierung der Erfindung an einer Scheibenbremse mit einer zentral angeordneten Gewindespindelanordnung, wie sie aus der zum Stand der Technik erwähnten DE 10 2012 008 573 A1 bekannt ist, kann die konkave Ausformung der dem Drehhebel zugewandten Stirnseite der Gewindespindelanordnung, die ein verdrehfest an der Schraube angeschlossenes Zahnrad aufweist, das mit einem Zahnrad des Nachstellers in Eingriff steht, direkt in die Schraube eingebracht sein, an der der konvexe Abschnitt des Drehhebels anliegt, unmittelbar oder mittelbar über eine beispielsweise zwischengelagerte Lagerschale. Denkbar ist jedoch auch, die konkave Ausformung in einem angeformten Ansatz des Zahnrades vorzusehen, der mit der Schraube in Eingriff steht.

Anstelle eines Zahnradantriebs zur Nachstellung der Gewindespindelanordnung sind auch andere Getriebeanordnungen denkbar, beispielsweise ein Zugmitteltrieb.

Im Fall einer Bremsung, d.h. bei Betätigung des Drehhebels, wird die Gewindespindelanordnung axial in Richtung des Bremsbelages verschoben, einschließlich des verdrehfest an der Schraube gehaltenen Zahnrades, das, wie erwähnt, in Eingriff mit dem Zahnrad des Nachstellers steht, der jedoch axial insoweit fest positioniert ist. D.h., beide in Eingriff stehenden Zahnräder vollführen eine Relativbewegung zueinander in axialer Richtung, was allerdings zu einer erheblichen mechanischen Belastung führt, durch die die Standzeit des Bremssystems beeinträchtigt wird.

Um hier Abhilfe zu schaffen, ist nach einem weiteren Gedanken der Erfindung vorgesehen, die beteiligten Getrieberäder wie Ketten- oder Zahnräder in axialer Richtung an einer Mitnehmereinrichtung zu halten, die vorzugsweise aus zwei parallel und abständig zueinander angeordneten Platten besteht, vorzugsweise aus Blech, zwischen denen die beispielsweise Zahnräder positioniert sind, wobei diese beiden Platten miteinander verbunden sind und mit geeigneten Mitteln wie Sicken, Distanzhülsen oder dergleichen auf Abstand gehalten werden. Dabei ist das beispielsweise Zahnrad des Nachstellers verdrehfest, jedoch axial verschiebbar am Nachsteller gehalten, so dass dieses Zahnrad die Axialbewegung des Zahnrades der Gewindespindelanordnung beim Bremsen bzw. auch beim Rückstellen mit vollführt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: eine Scheibenbremse nach dem Stand der Technik in einer teilweise geschnittenen Draufsicht
- Fig. 2: eine Zuspanneinrichtung gemäß der Erfindung in einer perspektivischen Ansicht
- Fig. 3: ein Ausführungsbeispiel der Zuspanneinrichtung in einer geschnittenen Seitenansicht
- Fig. 4: eine Einzelheit der Zuspanneinrichtung nach Fig. 3 in einer rückseitigen perspektivischen Ansicht
- Fig. 5: ein weiteres Ausführungsbeispiel der Zuspanneinrichtung in einer schematischen perspektivischen Ansicht
- Fig. 6: die Zuspanneinrichtung nach Fig. 5 in einer schematischen geschnittenen Seitenansicht
- Fig. 7: eine Einzelheit der Zuspanneinrichtung in einer perspektivischen Vorderansicht
- Fig. 8: die Zuspanneinrichtung in einer Seitenansicht
- Fig. 9: ein weiteres Ausführungsbeispiel der Erfindung in einer geschnittenen, perspektivisch dargestellten Seitenansicht
- Fig. 10: eine Teilansicht der Fig. 9, gleichfalls perspektivisch dargestellt
- Fig. 11: die Teilansicht nach Fig. 10 in einer geschwenkten Seitenansicht
- Fig. 12: eine Einzelheit der Zuspanneinrichtung nach Fig. 9 in einer perspektivischen Rückansicht
- Fig. 13: eine Teilansicht der Einzelheit nach Fig. 12
- Fig. 14: die Ausführungsvariante nach Fig. 9 in einer geschnittenen Draufsicht
- Fig. 15: eine Einzelheit der Fig. 14 in einer geschnittenen Draufsicht
- Fig. 16: eine geschnittene Seitenansicht der Zuspanneinrichtung gemäß der Linie XVI-XVI in Fig. 14.

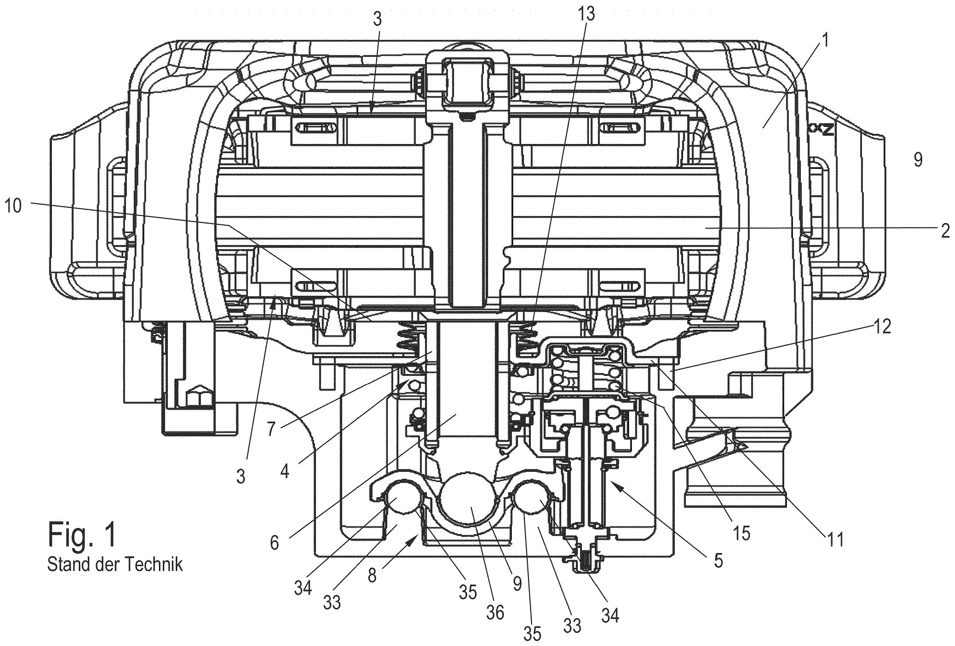

In der Fig. 1 ist eine Scheibenbremse nach dem Stand der Technik in schematischer Ansicht dargestellt, mit einem eine Bremsscheibe 2 übergreifenden, als Schiebesattel ausgebildeten Bremssattel 1, in dem zwei Bremsbeläge 3 angeordnet sind, die in Funktion, also bei einer Bremsung, gegen die Bremsscheibe 2 gepresst sind.

Zunächst wird dabei der zuspannseitige Bremsbelag 3 mittels einer Zuspanneinrichtung 8 gegen die Bremsscheibe 2 gepresst, während nachfolgend, aufgrund der Reaktionskräfte, durch Mitnahme des sich verschiebenden Bremssattels 1 der reaktionsseitige Bremsbelag 3 gegen die Bremsscheibe 2 gepresst wird.

Die Zuspanneinrichtung weist eine zentrale Gewindespindelanordnung 4 auf, die über einen Drehhebel 9 axial verschiebbar gegen den zuspannseitigen Bremsbelag 3 pressbar ist.

Die Gewindespindelanordnung 4 besteht aus einer verdrehbaren Schraube 6 und einer demgegenüber verdrehsicher gehaltenen Gewindehülse 7, deren Innengewinde in das Außengewinde der Schraube 6 eingreift. Auf der dem aktionsseitigen Bremsbelag 3 zugewandten Seite ist an der Gewindehülse 7 ein plattenförmiges Druckstück 10 angeschlossen, das im Bremsfall am Bremsbelag 3 anliegt.

Mit der Schraube 6 steht ein Nachsteller 5 zum Ausgleich eines sich verschleißbedingt verändernden Lüftspiels, d.h. des Abstands zwischen dem Bremsbelag 3 und der Bremsscheibe 2 in Verbindung.

Zum Schutz einer die Zuspanneinrichtung 8 und den Nachsteller 5 aufnehmenden Aufnahmekammer des Bremssattels 1 ist eine Montageöffnung des Bremssattels 1 auf der der Bremsscheibe 2 zugewandten Seite mit einer Verschlussplatte 11 verschlossen, die mit dem Bremssattel 1 durch Schrauben 12 verbunden ist.

Die Gewindespindelanordnung 4 durchtritt die Verschlussplatte 11, während sich der Nachsteller 5 an der Verschlussplatte 11 durch eine Druckfeder 15 belastet abstützt.

Der Durchtrittsbereich der Gewindespindelanordnung 4 ist durch einen Faltenbalg 13 abgedichtet, der einerseits an der Verschlussplatte 11 und andererseits am Druckstück 10 bzw. an der Gewindespindelanordnung 4 dichtend anliegt.

Der Drehhebel 9 liegt über eine Kugel 36 als Zwischenelement an der Gewindespindelanordnung 4 schwenkbar an, ebenso wie er sich über Kugeln 34 am Bremssattel 1 abstützt. Hierzu weist der Bremssattel 1 auf der der Gewindespindelanordnung 4 abgewandten Seite des Drehhebels 9, die einen Sattelkopf bildet, zwei parallel und abständig zueinander angeordnete, in einen Aufnahmeraum des Bremssattels 1 ragende angeformte Lagerböcke 33 auf, die zur Aufnahme der Kugeln 34 auf ihrer dem Drehhebel 9 zugewandten Seite eine an die einliegende Kugel 34 angepasste Mulde 35 auf.

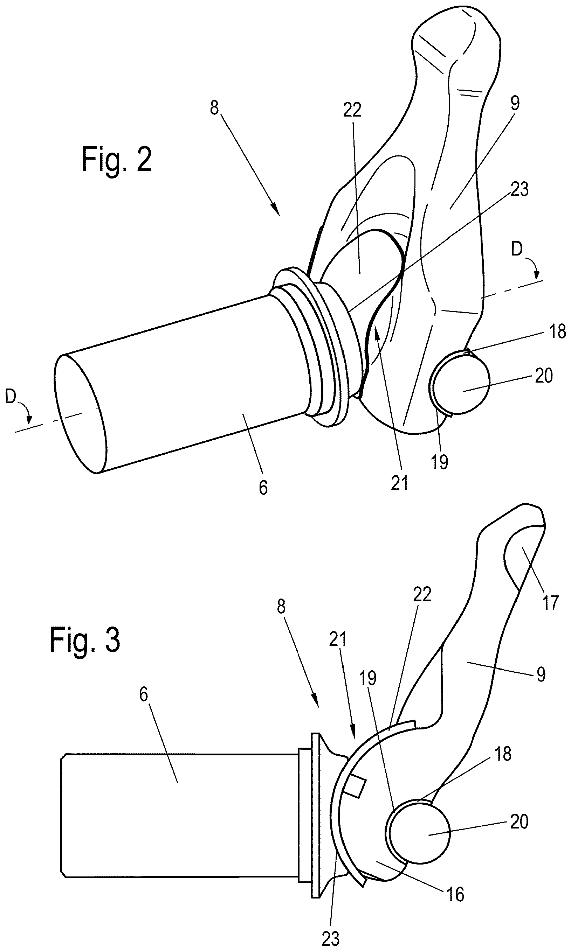

In den Fig. 2-4 ist ein Teil der Zuspanneinrichtung 8 abgebildet, wobei der einstückig, vorzugsweise durch Schmieden, Taumeln oder ein vergleichbares Umformverfahren hergestellte Drehhebel 9 an seinem einen Ende als Exzenter 16 bzw. als ein Exzenterabschnitt ausgebildet ist, während am anderen Ende des Drehhebels 9 vorzugsweise eine Kopplung, insbesondere in Form einer Vertiefung 17 vorgesehen ist, in die ein Stößel eines Bremszylinders eingreift bzw. eingreifen kann, der wiederum beispielsweise pneumatisch und/oder elektromotorisch betätigbar ist.

Wie insbesondere in den Fig. 2 und 3 zu erkennen ist, liegt der Exzenter 16 des Drehhebels 9 direkt in axialer Verlängerung der Gewindespindelanordnung 4, von der hier lediglich die Schraube 6 abgebildet ist, insbesondere in axialer Verlängerung einer Drehachse D, die der Drehachse der Schraubbewegung zwischen Gewindehülse 7 und Schraube 6 entspricht, an.

Auf der gegenüberliegenden Seite des Exzenters 16 ist in dem Exzenter 16 des Drehhebels 9 eine Rinne 19 ausgebildet, in der im Beispiel eine Lagereinrichtung, insbesondere eine (Gleit-)Lagerschale 18 angeordnet ist.

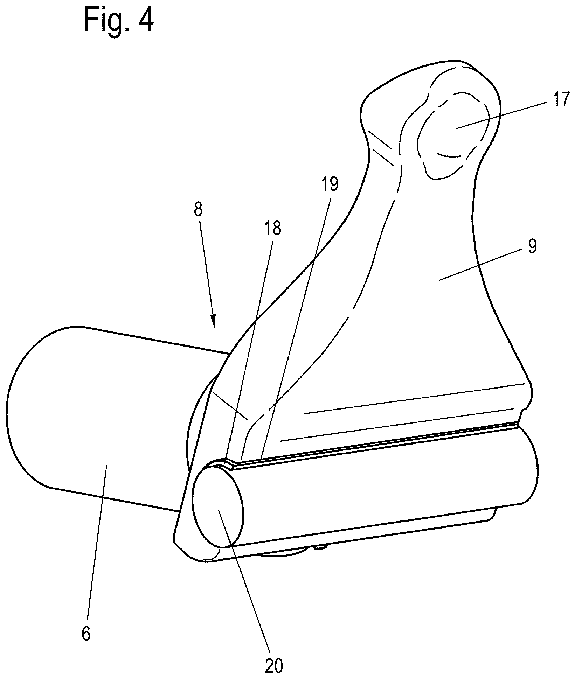

In der Lagereinrichtung, im Beispiel in der Lagerschale 18, liegt eine zylindrische Wälzrolle 20 ein, die sich an einer am Sattelkopf des Bremssattels 1 vorgesehenen Stützstelle, die eine Lagerstelle sein kann, abstützt. Dabei bildet die Wälzrolle 20 vorzugsweise ein Schwenklager für den Drehhebel 9 aus, was besonders deutlich in der Fig. 4 zu erkennen ist.

Erfindungsgemäß ist der Drehhebel 9 auf seiner der Wälzrolle 20 gegenüberliegenden, den Exzenter 16 bildenden Seite mit einem konvex geformten Abschnitt 21 versehen, der an einer daran angepassten konkaven Stirnseite 23 der Schraube 6 anliegt. Die Krümmung des konvex geformten Abschnitts 21 ist vorzugsweise der Krümmung des Exzenters 16 des Drehhebels 9 entgegengesetzt ausgerichtet.

Im Beispiel nach den Fig. 2 und 3 ist der Abschnitt 21 als Abschnitt eines Zylindermantels ausgebildet, dessen Krümmung sich in Schwenkrichtung des Drehhebels 9 erstreckt. Dabei ist der Abschnitt 21 mit einer Lagerschale 22, vorzugsweise als Verbund-Lager abgedeckt, das im Übrigen so bemessen ist, dass es während des gesamten Schwenkweges des Drehhebels 9 an der konkaven Stirnseite 23 der Schraube 6 anliegt.

Bei einer anderen Ausführungsvariante ist der konvex geformte Abschnitt 21 des Drehhebels 9 als Kugelabschnitt ausgebildet, während die Stirnseite 23 der Schraube 6 dann als Kalotte gestaltet ist, in der der Abschnitt 21 bzw. die Lagerschale 22 einliegt.

Während im Beispiel lediglich ein Bremsstempel, d.h. eine Schraube 6 des Bremsstempels dargestellt ist, besteht selbstverständlich auch die Möglichkeit, die Erfindung bei zwei Bremsstempeln bzw. zwei parallel und abständig zueinander angeordneten Gewindespindelanordnungen 4 zu realisieren.

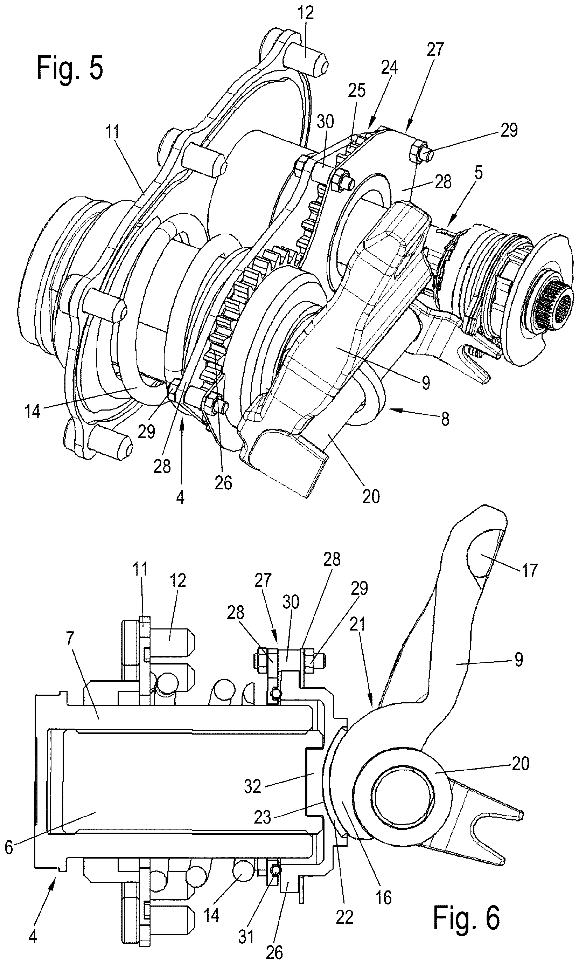

In der Fig. 5 ist als Einzelheit eine Zuspanneinrichtung 8 abgebildet, in ihrer funktionalen Ausgestaltung entsprechend der in der den Stand der Technik wiedergebenden Fig. 1. D.h., hier ist ein zentraler Bremsstempel in Form einer Gewindespindelanordnung 4 vorgesehen, mit einem benachbart dazu angeordneten Nachsteller 5, mit dem ein verdrehfest angeschlossenes Zahnrad 25 eines Zahnradgetriebes 24 antreibbar ist.

Zur Übertragung der Drehbewegung zum Zwecke eines Lüftspielausgleichs steht das Zahnrad 25 mit einem Zahnrad 26 in Eingriff, das verdrehfest mit der Schraube 6 verbunden ist, so dass sich bei Verdrehung des Zahnrades 26 und damit der Schraube 6 die darauf geführte Gewindehülse 7 axial verstellt.

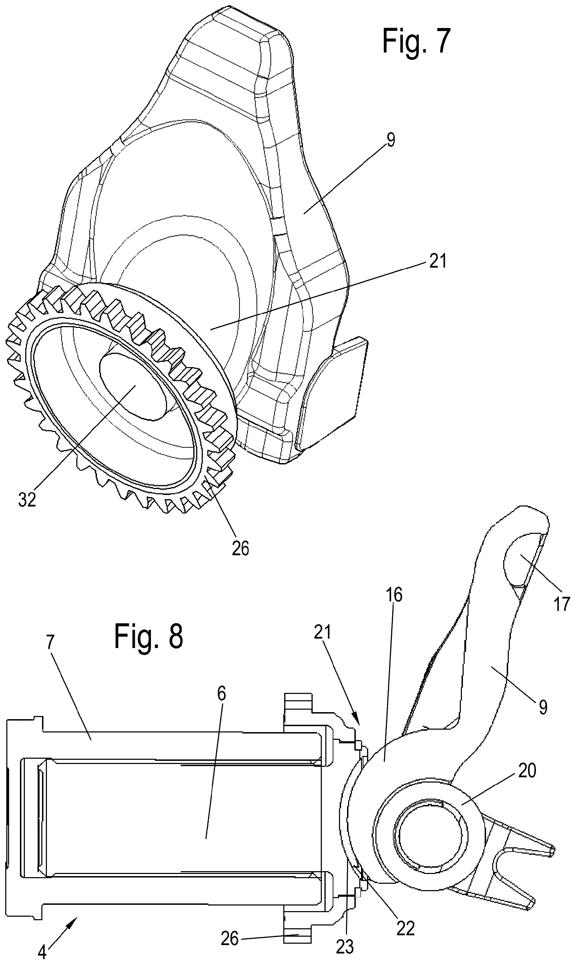

Die Anordnung des Zahnrades 26 ist auch in den Fig. 6 und 8 erkennbar.

Bei dem in der Fig. 6 gezeigten Beispiel stützt sich der konvexe Abschnitt 21 des Drehhebels 9 über die Lagerschale 22 an einem Ansatz 32 des Zahnrades 26 ab, wozu das Zahnrad 26 in Form eines Stirnrades einen insoweit geschlossenen Boden aufweist mit dem erhabenen Ansatz 32, was besonders deutlich in der Fig. 7 erkennbar ist, in denen der Drehhebel 9 und das Zahnrad 26 im Zusammenwirken in perspektivischer Darstellung abgebildet ist.

Abweichend von dieser konstruktiven Lösung ist in der Fig. 8 eine Variante dargestellt, bei der der konvexe Abschnitt 21 des Drehhebels 9 an der zugewandten Stirnseite der Schraube 6 anliegt, ebenfalls unter Zwischenlage der Lagerschale 22, wobei hierzu die Stirnfläche 23 der Schraube 6 an die konvexe Form des Abschnitts 21 angepasst ist.

In den Fig. 5 und 6 ist erkennbar, dass die beiden Zahnräder 25, 26 des Zahnradgetriebes 24 in einer Mitnehmereinrichtung 27 positioniert sind, die aus zwei parallel und abständig zueinander angeordneten Platten 28 gebildet sind.

Diese wiederum sind durch Schrauben 29 miteinander verbunden, wobei der Abstand zwischen den beiden Platten 28 durch auf den Schrauben 29 geführten Distanzhülsen 30 gebildet wird, wodurch ein Zwischenraum zur Aufnahme des Zahnradgetriebes 24 bereitgestellt wird. Zur Bildung des Zwischenraums kann zumindest eine der beiden Platten 28, vorzugsweise beide, mit in den Zwischenraum ragenden Sicken versehen sein, die beispielsweise miteinander verschweißt sind.

Bei einem Verschwenken des Drehhebels 9 zum Zuspannen der Bremse wird über den Exzenter 16 die Gewindespindelanordnung 4 axial in Richtung des Bremsbelages 3 (Fig. 1) verschoben, unter Mitnahme des Zahnrades 26. Mittels der Mitnehmereinrichtung 27 wird gleichzeitig auch das Zahnrad 25 des Nachstellers 5 mitgenommen, wozu das Zahnrad 25 zwar verdrehfest, jedoch axial verschieblich am Nachsteller 5 gehalten ist. Da sich die Zahnräder 25, 26 gegenüber den Platten 28 in Funktion verdrehen, sind, um einen Reibwiderstand zwischen den Zahnrädern 25, 26 und den Platten 28 zu reduzieren, Gleitringe 31 vorgesehen.

Im Übrigen erfolgt die Rückstellung der Gewindespindelanordnung 4 und damit auch des Zahnrades 25 nach einem Lösen der Bremse durch eine Druckfeder 14, die sich einerseits am Verschlussdeckel 11 und andererseits an der zugeordneten Platte 28 abstützt und die auf der Gewindespindelanordnung 4 geführt ist.

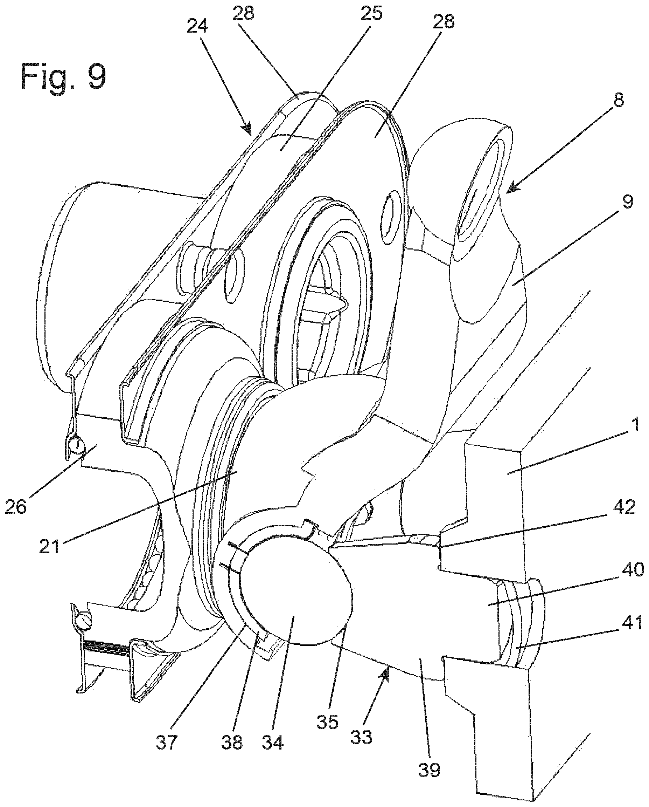

In den Fig. 9-16 ist eine weitere Ausführungsvariante der Erfindung dargestellt, bei der die parallel und abständig zueinander angeordneten Lagerböcke 33 als separate Bauteile im Bremssattel 1 gehalten sind.

Hierzu weist jeder Lagerbock 33 einen Tragbolzen 39 auf, der im Beispiel konisch ausgebildet ist und an dessen einem Ende ein Zapfen 40 angeformt ist, der in einer Bohrung 41 des Bremssattels 1 eingesteckt ist.

Die dem Zapfen 40 gegenüberliegende Stirnseite des Tragbolzens 39 ist, wie bereits zum Stand der Technik beschrieben, als Mulde 35 ausgebildet, in der die zugeordnete Kugel 34 einliegt.

Dabei weist der Drehhebel 9 zur Aufnahme der Kugel 34 eine kalottenartige Vertiefung 37 auf, die von einer Gleitlagerschale 38 ausgekleidet ist, wobei diese Gleitlagerschale 38 als Verbund-Gleitlager ausgebildet sein kann, mit einer Trägerschicht aus Metall und einer Gleitschicht aus Kunststoff. Alternativ oder ergänzend kann auch die Vertiefung mit einer Gleitlagerschale 38 abgedeckt sein.

Mit einer gebildeten abgestuften Auflagefläche 42 zwischen dem Tragbolzen 39 und dem Zapfen 40 liegt der Lagerbock 33 an einer angepassten, beispielsweise spanend bearbeiteten Fläche des Bremssattels 1 an.

Wie erwähnt, ist die Verbindung zwischen den Lagerböcken 33 und dem Bremssattel 1 so ausgebildet, dass zumindest ein Lagerbock 33 im Sinne einer schwimmenden Lagerung ausgebildet ist, mit der Möglichkeit fertigungsbedingte Toleranzen der Zuspanneinrichtung 8 auszugleichen.

Damit wird eine Überbestimmung der Lagerung des Drehhebels 9 vermieden, die sich dann ergeben würde, wenn beide Lagerböcke 33 starr am Bremssattel 1 gehalten wären, wodurch ein erhöhter Verschleiß und eine Reduzierung der Standzeit deutlich vermindert wird.

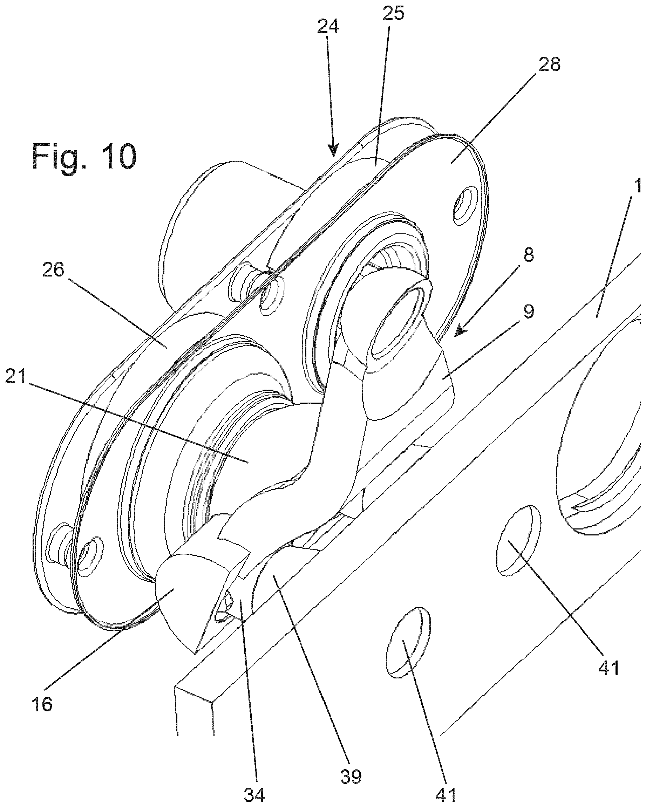

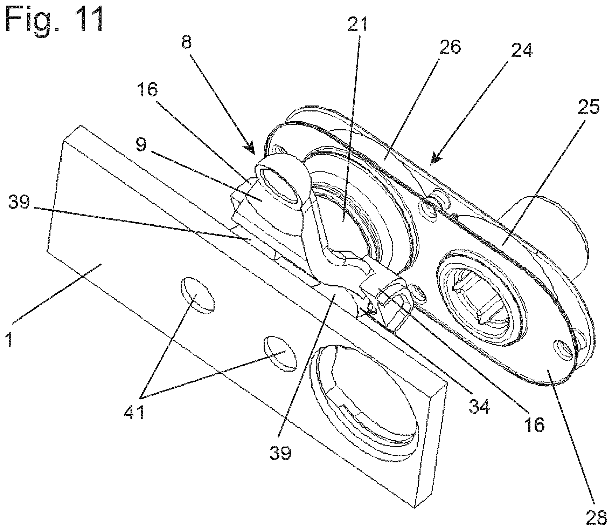

In der Fig. 9 ist eine geschnittene Seitenansicht eines Teils einer erfindungsgemäßen Scheibenbremse abgebildet. Die Fig. 10 und 11 zeigen in unterschiedlichen Rückansichten jeweils die Anordnung des Drehhebels 9 der Zuspanneinrichtung 8 und dessen Lagerung an dem Tragbolzen 39 mittels der Kugeln 34.

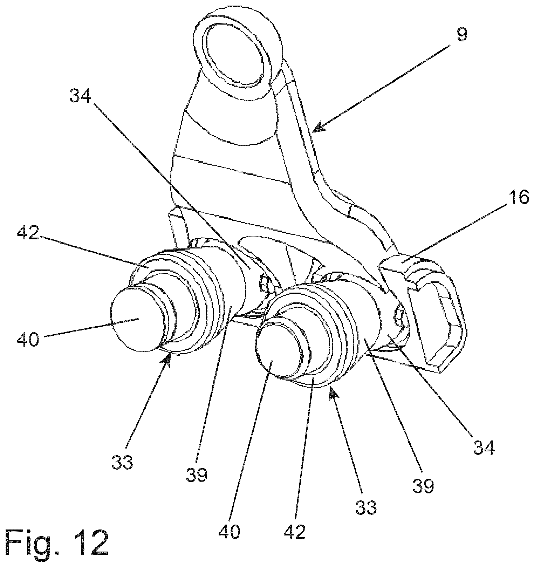

Die Fig. 12 gibt den Drehhebel 9 mit einliegenden Kugeln 34 als Alleinstellung wieder, wobei die Lagerböcke 33 als Einzelheit erkennbar sind.

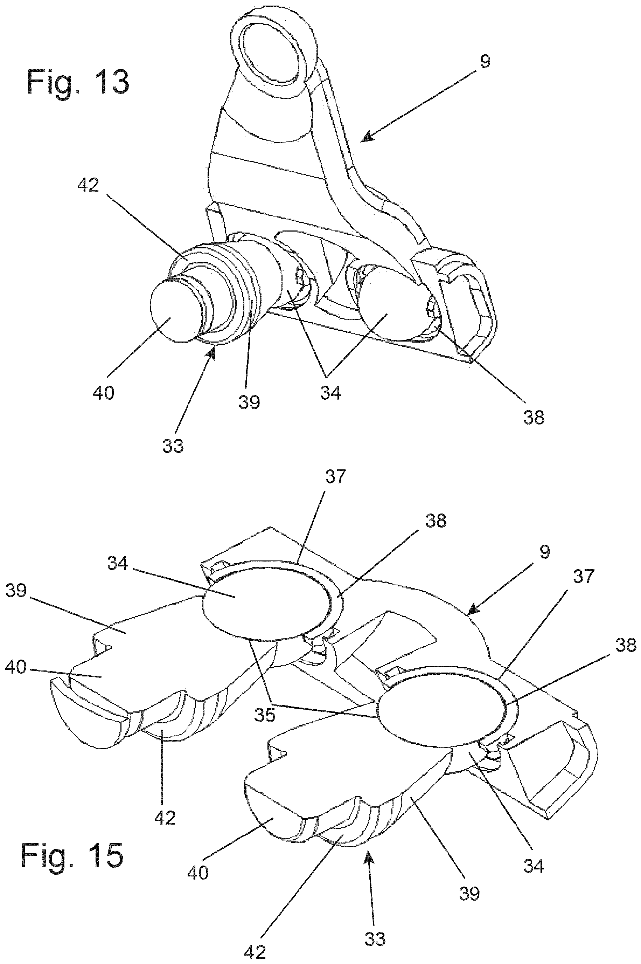

Eine vergleichbare Abbildung ist in der Fig. 13 zu sehen, wobei hier einseitig ein Lagerbock 33 und an der anderen Seite die Kugel 34 ohne Abstützung im Tragbolzen 39 erkennbar ist.

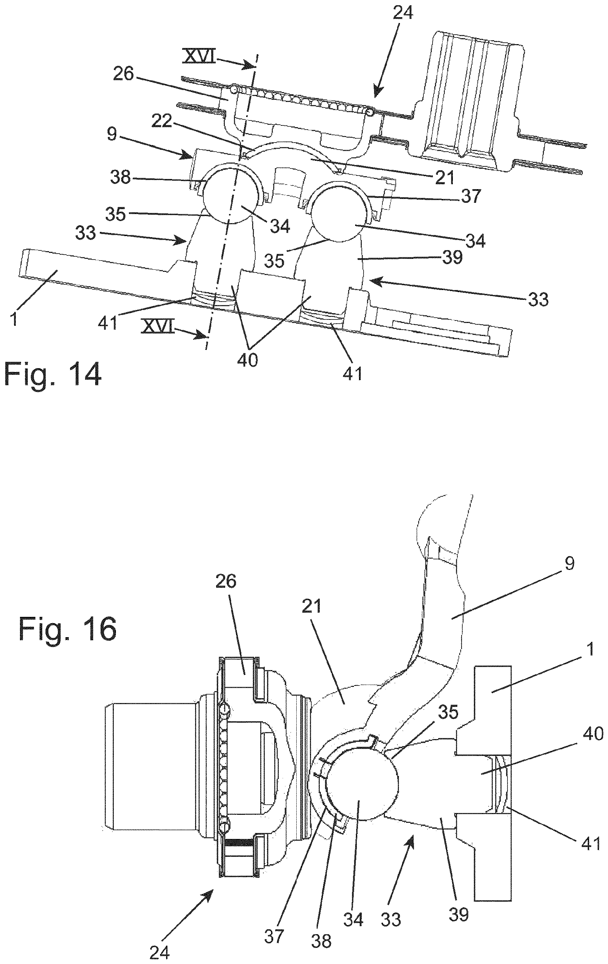

In der Fig. 14 ist die in der Fig. 9 dargestellte Einzelheit in einer geschnittenen Draufsicht abgebildet, während die Fig. 15 eine Einzelheit der Zuspanneinrichtung 8 der Fig. 14 in einer gleichfalls geschnittenen Draufsicht zeigt, wobei hier auf die Darstellung des Getriebes 24 und des Bremssattels 1 verzichtet ist.

Die Fig. 16 wiederum zeigt eine geschnittene Seitenansicht der Zuspanneinrichtung 8 entsprechen der Schnittlinie XVI - XVI in Fig. 14.

### Bezugszeichenliste

- 1: Bremssattel
- 2: Bremsscheibe
- 3: Bremsbelag
- 4: Gewindespindel
- 5: Nachsteller
- 6: Schraube
- 7: Gewindehülse
- 8: Zuspanneinrichtung
- 9: Drehhebel
- 10: Druckstück
- 11: Verschlussplatte
- 12: Schraube
- 13: Faltenbalg
- 14: Druckfeder
- 15: Druckfeder
- 16: Exzenter
- 17: Vertiefung
- 18: Lagerschale
- 19: Rinne
- 20: Wälzrolle
- 21: Abschnitt
- 22: Lagerschale
- 23: Stirnseite
- 24: Zahnradgetriebe
- 25: Zahnrad
- 26: Zahnrad
- 27: Mitnehmereinrichtung
- 28: Platte
- 29: Schraube
- 30: Distanzhülse
- 31: Gleitring
- 32: Ansatz
- 33: Lagerbock
- 34: Kugel
- 35: Mulde
- 36: Kugel
- 37: Kalottenvertiefung
- 38: Gleitlagerschale
- 39: Tragbolzen
- 40: Zapfen
- 41: Bohrung
- 42: Auflagefläche

## Patentansprüche

1. Scheibenbremse für ein Fahrzeug, insbesondere für ein Nutzfahrzeug, mit
- einem zum Übergreifen einer Bremsscheibe (2) ausgelegten Bremssattel (1), in dem eine Zuspanneinrichtung (8) angeordnet ist,
- einem einen Exzenter (16) aufweisenden einstückigen Drehhebel (9) und
- mindestens einem Bremsstempel, der als eine Gewindespindelanordnung (4) mit einer um eine Drehachse (D) verdrehbaren Schraube (6) und einer dieser gegenüber verdrehsicher gehaltenen Gewindehülse (7) ausgebildet ist, deren Innengewinde in ein Außengewinde der Schraube (6) eingreift, und mit dem bei Betätigung des Drehhebels (9) wenigstens ein Bremsbelag (3) gegen die Bremsscheibe (2) pressbar ist,
- wobei der Drehhebel (9) im Bremssattel (1) relativ zu diesem verschwenkbar angeordnet ist und direkt oder über eines oder mehrere zwischengeschaltete Elemente an dem Bremssattel (1) in wenigstens einem Abstützbereich abgestützt ist,
**dadurch gekennzeichnet, dass**
- der gegenüber dem Bremsstempel verschwenkbare Drehhebel (9) auf seiner der Abstützstelle an dem Bremssattel (1) gegenüberliegenden Seite mindestens einen konvex angeformten Abschnitt (21) aufweist, der an einer daran angepassten konkaven Stirnseite (23) der Gewindespindelanordnung (4) in axialer Verlängerung der Drehachse (D) anliegt.

2. Scheibenbremse nach Anspruch 1, **dadurch gekennzeichnet, dass** der konvex geformte Abschnitt (21) als Kugelabschnitt ausgebildet ist.

3. Scheibenbremse nach Anspruch 1, **dadurch gekennzeichnet, dass** der konvex geformte Abschnitt (21) als elliptisch geformter Abschnitt ausgebildet ist.

4. Scheibenbremse nach Anspruch 1, **dadurch gekennzeichnet, dass** der konvex geformte Abschnitt (21) als tonnenabschnittsartig geformter Abschnitt ausgebildet ist.

5. Scheibenbremse nach Anspruch 1, **dadurch gekennzeichnet, dass** der konvexe Abschnitt (21) als Zylinderabschnitt ausgebildet ist, wobei sich die Krümmung in Schwenkrichtung des Drehhebels (9) erstreckt.

6. Scheibenbremse nach Anspruch 1, bei der an den Bremsstempel ein Getrieberad, insbesondere ein Zahnrad (26) verdrehfest angeordnet ist, das mit einer Nachstelleinrichtung (5) in Wirkverbindung steht, **dadurch gekennzeichnet, dass** die konkave Stirnseite (23), an der der konvexe Abschnitt (21) anliegt, am Bremsstempel oder am Getrieberad vorgesehen ist.

7. Scheibenbremse nach Anspruch 1, **dadurch gekennzeichnet, dass** der konvex angeformte Abschnitt (21) und/oder die daran anliegende konkave Stirnseite (23) feinbearbeitet ist, insbesondere durch Gleitschleifen, Läppen, Polieren, Honen, Erodieren oder Walzen.

8. Scheibenbremse nach einem der vorhergehenden Ansprüche, **dadurch gekennzeichnet, dass** der konvex geformte Abschnitt (21) und/oder die daran angepasste konkave Stirnseite des Bremsstempels mit einer Lagerschale (22) versehen sind.

9. Scheibenbremse nach einem der vorhergehenden Ansprüche, **dadurch gekennzeichnet, dass** der konvex geformte Abschnitt (21) oder die Lagerschale (22) des Drehhebels (9) in Erstreckung in Schwenkrichtung des Drehhebels (9) dem maximalen Schwenkweg des Drehhebels (9) entspricht.

10. Scheibenbremse nach einem der vorhergehenden Ansprüche, **dadurch gekennzeichnet, dass** der konvex geformte Abschnitt (21) am Exzenter (16) des Drehhebels (9) ausgebildet ist.

11. Scheibenbremse nach einem der vorhergehenden Ansprüche, **dadurch gekennzeichnet, dass** am Drehhebel (9) auf der dem konvex geformten Abschnitt (21) gegenüberliegenden Seite mindestens ein Wälzkörper, wie eine Wälzrolle (20), eine Kugel oder dergleichen vorgesehen ist.

12. Scheibenbremse nach Anspruch 11, **dadurch gekennzeichnet, dass** zwischen dem Wälzkörper und dem Drehhebel (9) und/oder zwischen dem Wälzkörper und dem Bremssattel (1) wenigstens eine Lagereinrichtung vorgesehen ist.

13. Scheibenbremse nach Anspruch 12, **dadurch gekennzeichnet, dass** die wenigstens eine Lagereinrichtung als Gleitlagerschale (19) ausgebildet ist.

14. Scheibenbremse nach Anspruch 12, **dadurch gekennzeichnet, dass die** wenigstens eine Lagereinrichtung als Wälzlagerschale ausgebildet ist.

15. Scheibenbremse nach Anspruch 8, **dadurch gekennzeichnet, dass** die Lagerschale (22) am konvex geformten Abschnitt (21) des Drehhebels (9) und/oder die Gleitlagerschale (19) zur Aufnahme des Wälzkörpers aus einem Verbund-Gleitlager gebildet sind.

16. Scheibenbremse nach einem der vorhergehenden Ansprüche 6 bis 15, **dadurch gekennzeichnet, dass** das mit dem Bremsstempel verdrehfest verbundene Getrieberad und ein damit korrespondierendes Getrieberad der Nachstelleinrichtung (5) in einer axial verschieblich, jedoch verdrehsicher an der Nachstelleinrichtung (5) gehaltenen Mitnehmereinrichtung (27) angeordnet sind.

17. Scheibenbremse nach Anspruch 16, **dadurch gekennzeichnet, dass** die Mitnehmereinrichtung (27) aus zwei parallel und abständig zueinander angeordneten Platten (28) besteht.

18. Scheibenbremse nach Anspruch 17, **dadurch gekennzeichnet, dass** zur Abstandshaltung der Platten (28) Distanzhülsen (30) vorgesehen sind, durch die Schrauben (29) geführt sind.

19. Scheibenbremse nach Anspruch 17 oder 18, **dadurch gekennzeichnet, dass** in zumindest einer Platte (28) vorzugsweise in beiden Platten (28) Sicken vorgesehen sind, die miteinander verbunden sind.

20. Scheibenbremse nach einem der vorhergehenden Ansprüche, **dadurch gekennzeichnet, dass** sich der Drehhebel (9) auf seiner dem konvex geformten Abschnitt (21) gegenüberliegenden Seite an mindestens einer Kugel (34) abstützt, die an einem an dem Bremssattel (1) gehaltenen Lagerbock (33) anliegt, wobei die Kugel (34) in einer an deren Form angepassten Mulde (35) einliegt und wobei der Lagerbock (33) als separates Bauteil ausgebildet ist.

21. Scheibenbremse nach Anspruch 20, **dadurch gekennzeichnet, dass** jeder Lagerbock (33) einen zylindrischen Zapfen (40) aufweist, der sich an einen durchmessergrößeren Tragbolzen (39) anschließt und der in eine Bohrung (41) des Bremssattels (1) eingefügt ist.

22. Scheibenbremse nach Anspruch 20 oder 21, **dadurch gekennzeichnet, dass** zumindest einer von zwei Lagerböcken (33), die parallel und abständig zueinander angeordnet sind, toleranzausgleichend am Bremssattel (1) gehalten ist.

23. Scheibenbremse nach einem der vorhergehenden Ansprüche 20 bis 22, **dadurch gekennzeichnet, dass** der Lagerbock (33) als Kaltpressteil ausgebildet ist.

24. Scheibenbremse nach einem der vorhergehenden Ansprüche 20 bis 23, **dadurch gekennzeichnet, dass** die Mulde (35) und/oder eine kalottenförmige Vertiefung (37) des Drehhebels (9) mit einem Gleitlager (38), vorzugsweise einem Verbund-Gleitlager ausgekleidet ist.

25. Scheibenbremse nach einem der vorhergehenden Ansprüche 21 bis 24, **dadurch gekennzeichnet, dass** eine abgestufte Auflagefläche (42) zwischen dem Tragbolzen (39) und dem Zapfen (40) angeformt ist, die sich umlaufend quer zur Längsachse des Lagerbocks (33) erstreckt, an einer spanend bearbeiteten Anlagefläche des Bremssattels (1) anliegt.

26. Scheibenbremse nach einem der vorhergehenden Ansprüche 20 bis 25, **dadurch gekennzeichnet, dass** der Lagerbock (33) rotationssymmetrisch ist.

27. Scheibenbremse nach einem der vorhergehenden Ansprüche 20 bis 26, **dadurch gekennzeichnet, dass** ein Zapfen (40) der beiden Lagerböcke (33) fest mit dem Bremssattel (1) verbunden ist.

## Claims

1. Disc brake for a vehicle, in particular a commercial vehicle, having
- a brake calliper (1) which is designed to reach over a brake disc (2) and in which a brake application device (8) is arranged,
- a single-piece rotary lever (9) which has an eccentric (16), and
- at least one brake plunger which is configured as a threaded spindle arrangement (4) with a screw (6) rotatable about a rotational axis (D) and a threaded sleeve (7) non-rotatably held with respect thereto, the female thread of which engages with a male thread of the screw (6), and by way of which at least one brake pad (3) can be pressed against the brake disc (2) upon actuation of the rotary lever (9),
- the rotary lever (9) being arranged in the brake calliper (1) such that it can be pivoted relative to the latter, and being supported on the brake calliper (1) in at least one supporting region directly or via one or more elements which are connected in between,
**characterised in that**
- the rotary lever (9) which can be pivoted with respect to the brake plunger has at least one convexly shaped section (21) on its side which lies opposite the supporting point on the brake calliper (1), which convexly shaped section (21) bears against a concave end face (23) of the threaded spindle arrangement (4) which is adapted to it, in an axial extension of the rotational axis (D).

2. Disc brake according to claim 1, **characterised in that** the convexly shaped section (21) is configured as a spherical section.

3. Disc brake according to claim 1, **characterised in that** the convexly shaped section (21) is configured as an elliptically shaped section.

4. Disc brake according to claim 1, **characterised in that** the convexly shaped section (21) is configured as a section which is shaped in the manner of a barrel section.

5. Disc brake according to claim 1, **characterised in that** the convexly shaped section (21) is configured as a cylinder section, the curvature extending in the pivoting direction of the rotary lever (9).

6. Disc brake according to claim 1, in which a gear mechanism wheel, in particular a gearwheel (26), which is operatively connected to an adjusting device (5) is arranged non-rotatably on the brake plunger (6), **characterised in that** the concave end face (23), against which the convex section (21) bears, is provided on the brake plunger (6) or on the gear mechanism wheel.

7. Disc brake according to claim 1, **characterised in that** the convexly shaped section (21) and/or the concave end face (23) which bears against it are/is precision machined, in particular by way of vibratory grinding, lapping, polishing, honing, eroding or rolling.

8. Disc brake according to any of the preceding claims, **characterised in that** the convexly shaped section (21) and/or the concave end face of the brake plunger (6) which is adapted to the former are/is provided with a bearing shell (22).

9. Disc brake according to any of the preceding claims, **characterised in that** the convexly shaped section (21) or the bearing shell (22) of the rotary lever (9) corresponds in terms of the extent in the pivoting direction of the rotary lever (9) to the maximum pivoting travel of the rotary lever (9).

10. Disc brake according to any of the preceding claims, **characterised in that** the convexly shaped section (21) is formed on the eccentric (16) of the rotary lever (9).

11. Disc brake according to any of the preceding claims, **characterised in that** at least one anti-friction body, such as an anti-friction roller (20), a ball or the like, is provided on the rotary lever (9) on the side which lies opposite the convexly shaped section (21).

12. Disc brake according to claim 11, **characterised in that** at least one bearing device is provided between the anti-friction body and the rotary lever (9) and/or between the anti-friction body and the brake calliper (1).

13. Disc brake according to claim 12, **characterised in that** the at least one bearing device is configured as a plain bearing shell (19).

14. Disc brake according to claim 12, **characterised in that** the at least one bearing device is configured as an anti-friction bearing shell.

15. Disc brake according to claim 8, **characterised in that** the bearing shell (22) on the convexly shaped section (21) of the rotary lever (9) and/or the plain bearing shell (19) are/is formed to receive the anti-friction body from a composite plain bearing.

16. Disc brake according to any of the preceding claims 6 to 15, **characterised in that** the gear mechanism wheel, which is connected non-rotatably to the brake plunger (6), and a gear mechanism wheel, which corresponds therewith, of the adjusting device (5) are arranged in a driver device (27) which is held on the adjusting device (5) such that it can be displaced axially but is secured against rotation.

17. Disc brake according to claim 16, **characterised in that** the driver device (27) consists of two plates (28) which are arranged parallel to and at a distance from one another.

18. Disc brake according to claim 17, **characterised in that** spacer sleeves (30) are provided in order to space the plates (28) apart, through which spacer sleeves (30) screws (29) are guided.

19. Disc brake according to claim 17 or 18, **characterised in that** beads which are connected to one another are provided in at least one plate (28), preferably in both plates (28).

20. Disc brake according to any of the preceding claims, **characterised in that,** on its side which lies opposite the convexly shaped section (21), the rotary lever (9) is supported on at least one ball (34) which bears against a bearing block (33) which is held on the brake calliper (1), the ball (34) lying in a recess (35) which is adapted to its shape, and the bearing block (33) being configured as a separate component.

21. Disc brake according to claim 20, **characterised in that** each bearing block (33) has a cylindrical journal (40) which adjoins a support pin (39) of greater diameter and which is inserted into a bore (41) of the brake calliper (1).

22. Disc brake according to claim 20 or 21, **characterised in that** at least one of two bearing blocks (33) which are arranged parallel to and at a distance from one another is held on the brake calliper (1) in a manner which compensates for tolerances.

23. Disc brake according to any of the preceding claims 20 to 22, **characterised in that** the bearing block (33) is configured as a cold pressed part.

24. Disc brake according to any of the preceding claims 20 to 23, **characterised in that** the recess (35) and/or a dome-shaped depression (37) of the rotary lever (9) are/is lined with a plain bearing (38), preferably a composite plain bearing.

25. Disc brake according to any of the preceding claims 20 to 24, **characterised in that** a stepped supporting face (42) is formed between the support pin (39) and the journal (40), which supporting face (42) extends circumferentially transversely with respect to the longitudinal axis of the bearing block (33), bears against a machined bearing face of the brake calliper (1).

26. Disc brake according to any of the preceding claims 20 to 25, **characterised in that** the bearing block (33) is rotationally symmetrical.

27. Disc brake according to any of the preceding claims 20 to 26, **characterised in that** a journal (40) of the two bearing blocks (33) is connected fixedly to the brake calliper (1).

## Revendications

1. Frein à disque d'un véhicule, en particulier d'un véhicule utilitaire, comprenant
- un étrier (1) de frein, qui est conçu pour chevaucher un disque (2) de frein et dans lequel est monté un dispositif (8) de serrage,
- un levier (9) tournant d'une seule pièce ayant un excentrique (16) et
- au moins un piston de frein, qui est constitué sous la forme d'un agencement (4) à broche filetée ayant une vis (6) pouvant tourner autour d'un axe (D) de rotation et un manchon (7) fileté maintenu sans possibilité de torsion par rapport à celle-ci, dont le taraudage engrène dans un filetage de la vis (6) et par lequel, lors de l'actionnement du levier (9) tourant, au moins une garniture (3) de frein peut être pressée sur le disque (2) de frein,
- dans lequel le levier (9) tournant est monté dans l'étrier (1) de frein pivotant par rapport à celui-ci et s'appuie directement ou par un élément ou plusieurs éléments interposés sur l'étrier (1) de frein dans au moins une partie d'appui,
**caractérisé en ce que**
- le levier tournant pouvant pivoter par rapport au piston (9) de frein a, du côté éloigné du point d'appui sur l'étrier (1), au moins une partie (21) convexe, qui s'applique, dans un prolongement axial de l'axe (D) de rotation, à un côté (23) frontal concave s'y adaptant de l'agencement (4) à broche filetée.

2. Frein à disque suivant la revendication 1, **caractérisé en ce que** la partie (21) convexe est constituée sous la forme d'une partie sphérique.

3. Frein à disque suivant la revendication 1, **caractérisé en ce que** la partie (21) convexe est constituée sous la forme d'une partie elliptique.

4. Frein à disque suivant la revendication 1, **caractérisé en ce que** la partie (21) convexe est constituée sous la forme d'une partie de type en partie bombée.

5. Frein à disque suivant la revendication 1, **caractérisé en ce que** la partie (21) convexe est constituée sous la forme d'une partie cylindrique, dans lequel la courbure s'étend dans la direction de pivotement du levier (9) tournant.

6. Frein à disque suivant la revendication 1, dans lequel, sur le piston de frein est montée, solidaire en rotation, une roue d'entraînement, en particulier une roue (26) dentée, qui est en liaison d'action avec un dispositif (5) de rattrapage, **caractérisé en ce que** le côté (23) frontal concave, où s'applique la partie (21) convexe, est prévu sur le piston de frein ou sur la roue d'entraînement.

7. Frein à disque suivant la revendication 1, **caractérisé en ce que** la partie (21) convexe et/ou le côté (23) frontal concave s'y appliquant est usiné à finition, en particulier par ponçage, rodage, polissage, superfinition, érodage ou laminage.

8. Frein à disque suivant l'une des revendications précédentes, **caractérisé en ce que** la partie (21) convexe et/ou le côté frontal concave s'y adaptant du piston de frein sont pourvus d'un coussinet (22).

9. Frein à disque suivant l'une des revendications précédentes, **caractérisé en ce que** la partie (21) convexe ou le coussinet (22) du levier (9) tournant corresponde, en étendue, dans la direction de pivotement du levier (9) tournant, à la course de pivotement maximum du levier (9) tournant.

10. Frein à disque suivant l'une des revendications précédentes, **caractérisé en ce que** la partie (21) convexe est constituée sur l'excentrique (16) du levier (9) tournant.

11. Frein à disque suivant l'une des revendications précédentes, **caractérisé en ce que,** sur le levier (9) tournant, du côté opposé à la partie (21) convexe, est prévue au moins une pièce de roulement, comme un rouleau (20), une bille ou analogue.

12. Frein à disque suivant la revendication 11, **caractérisé en ce qu'**au moins un dispositif de palier est prévu entre le corps de roulement et le levier (9) tournant et/ou entre le corps de roulement et l'étrier (1) de frein.

13. Frein à disque suivant la revendication 12, **caractérisé en ce que** le au moins un dispositif de palier est constitué en coussinet (19) lisse.

14. Frein à disque suivant la revendication 12, **caractérisé en ce que** le au moins un dispositif de palier est constitué en coussinet lisse.

15. Frein à disque suivant la revendication 8, **caractérisé en ce que** le coussinet (22) est formé sur la partie (21) convexe du levier (9) tournant et/ou le coussinet (19) lisse est formé pour la réception de la pièce de roulement d'un palier lisse composite.

16. Frein à disque suivant l'une des revendications 6 à 15 précédentes, **caractérisé en ce que** la roue d'engrenage solidaire en rotation du piston de frein et une roue d'engrenage y correspondant du dispositif (5) de rattrapage sont disposées dans un dispositif (27) entraîneur coulissant axialement, mais maintenu sans possibilité de torsion sur le dispositif (5) de rattrapage.

17. Frein à disque suivant la revendication 16, **caractérisé en ce que** le dispositif (27) entraîneur est constitué de deux plaques (28) montées parallèlement entre elles et à distance l'une de l'autre.

18. Frein à disque suivant la revendication 17, **caractérisé en ce que,** pour maintenir à distance les plaques (28), il est prévu des manchons (30) de mise à distance, qui sont guidés par les vis (29).

19. Frein à disque suivant la revendication 17 ou 18, **caractérisé en ce qu'**au moins des plaques (28), de préférence sur les deux plaques (28) sont prévues des nervures, qui sont reliées entre elles.

20. Frein à disque suivant l'une des revendications précédentes, **caractérisé en ce que** le levier (9) tournant s'appuie, de son côté opposé à la partie (21) convexe, sur au moins une bille (34), qui s'applique à un support (33) de palier maintenu sur l'étrier (1) de frein, la bille (34) pénétrant dans une cuvette (35) adaptée à sa forme et le support (33) de palier étant constitué sous la forme d'une pièce distincte.

21. Frein à disque suivant la revendication 20, **caractérisé en ce que** le support (33) de palier a un tourillon (40) cylindrique, qui se raccorde à un axe (39) support de diamètre plus grand et qui est inséré dans un trou (41) de l'étrier (1) de frein.

22. Frein à disque suivant la revendication 20 ou 21, **caractérisé en ce qu'**au moins l'un de deux supports (33) de palier, qui sont disposés parallèlement entre eux et à distance l'un de l'autre, est maintenu de manière à compenser les tolérances sur l'étrier (1) de frein.

23. Frein à disque suivant l'une des revendications 20 à 22 précédentes, **caractérisé en ce que** le support (33) de palier est constitué sous la forme d'une pièce estampée à froid.

24. Frein à disque suivant l'une des revendications 20 à 23 précédentes, **caractérisé en ce que** la cuvette (35) et/ou le creux (37) en forme de calotte du levier (9) tournant est habillé d'un palier (38) lisse, de préférence d'un palier lisse composite.

25. Frein à disque suivant l'une des revendications 21 à 24 précédentes, **caractérisé en ce qu'**une surface (42) d'appui étagée est formée entre l'axe (39) de support et le tourillon (40), surface qui s'étend en faisant le tour, transversalement à l'axe longitudinal du support (33) de palier et s'applique à une surface de contact, usinée à enlèvement de copeaux, de l'étrier (1) de frein.

26. Frein à disque suivant l'une des revendications 20 à 25 précédentes, **caractérisé en ce que** le support (33) de palier est de révolution.

27. Frein à disque suivant l'une des revendications 20 à 26 précédentes, **caractérisé en ce qu'**un tourillon (40) des deux supports (33) de palier est relié fixement à l'étrier (1) de frein.
